# FASCICULE DE BREVET EUROPEEN

(11) **EP 0 317 497 B1**
(45) Date de publication et mention de la délivrance du brevet: **14.04.1993**
(21) Numéro de dépôt: 88810641.6
(22) Date de dépôt: 20.09.1988
(51) Int. Cl.: G01D 5/20, G01D 3/04

(54) **Détecteur de position**
Positionsgeber
Position detector

(30) Priorité: 20.11.1987 CH 4529/87
(43) Date de publication de la demande: 24.05.1989
(73) Titulaire: VIBRO-METER SA, CH-1700 Fribourg (CH)
(72) Inventeur: Mancini, Nicolas, CH-1752 Villars-sur-Glâne (CH)
(74) Mandataire: Steiner, Martin

(56) Documents cités:
- FR-A- 2 565 695
- US-A- 4 406 999
- US-A- 4 667 158

## Description

La présente invention concerne un détecteur de position selon le préambule de la revendication 1.

Un tel détecteur de position est décrit dans US-A-4 406 999. Le noyan de ce détecteur présente une tige en materiau ferromagnétique recouverte partiellement d'un tube en matériau de bonne conductivité. Cette disposition permet de réaliser un détecteur de faible dimensions, mais auqu'une compensation en température est prévue et possible.

Il est également connu de compenser la dépendance en température du détecteur par une mesure différentielle de la variation d'impédance de la bobine en fonction de la position du noyau à l'intérieur de celle-ci. Cependant, une telle mesure différentielle demande un ensemble de bobines disposées axialement les unes à côté des autres, la longueur de l'ensemble étant pratiquement trois fois celle d'une bobine de mesure seule utilisée dans une mesure directe. Il est clair que selon le genre d'application, il pourrait être utile de diminuer non seulement l'encombrement du détecteur mais aussi son poids. Ceci est plus particulièrement le cas dans les applications prévues pour l'aviation où le détecteur peut être utilisé par exemple pour mesurer l'inclinaison des aubes orientant le flux d'air envoyé par un distributeur à la turbine ou encore pour mesurer l'inclinaison des volets des gouvernails de profondeur. Dans la première application, mesure de l'inclinaison des aubes, le détecteur doit fonctionner à une température jusqu'à + 250°C. Dans la seconde application, le détecteur doit fonctionner à la température ambiante qui peut descendre jusqu'à - 40°C. Il serait donc intéressant d'avoir un détecteur de position de faible poids et encombrement, susceptible de fonctionner entre - 40°C et + 250°C avec une bonne stabilité en température et ne demandant pas de branchement différentiel pour simplifier et diminuer les coûts.

En conséquence, le but de la présente invention est de réaliser un détecteur de position de faible poids et encombrement, susceptible de fonctionner dans une large plage de témperature, notamment à haute température, le détecteur étant compensé en température dans la plage en question.

Pour atteindre ce but, le détecteur de position selon l'invention est réalisé comme décrit dans la partie caractérisante de la revendication 1. Il a été trouvé qu'une combinaison de matériaux différents pour le noyau du détecteur permet d'atteindre une excellente compensation dans une large plage de température.

L'invention va être décrite plus en détail ci-après, à l'aide du dessin d'un exemple d'exécution.
La figure 1 est une vue schématique en coupe longitudinale du détecteur selon l'invention, et
la figure 2 est un schéma-bloc de l'électronique associée au détecteur de la fig. 1.

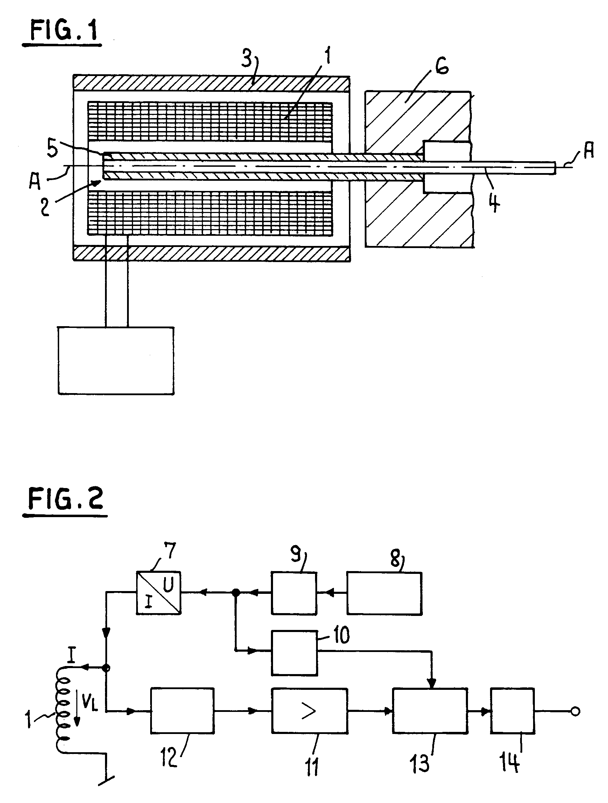

La figure 1 montre que le détecteur comporte une bobine 1 dont la longueur selon l'axe longitudinal A - A est pratiquement égale à la grandeur du chemin de mesure parcouru par le noyau 2 au centre de cette bobine. La bobine 1 est protégée des influences électromagnétiques extérieurs par un blindage 3. La figure 1 montre que le noyau 2 est en deux pièces et qu'il comporte en son centre une tige ferromagnétique 4 entourée d'un tube 5 avec une bonne conductibilité électrique mais de faible perméabilité magnétique, p.ex. un tube en aluminium ou en cuivre ou en tout autre matériau adéquat. La tige 4 peut être en fer ou en acier ou en tout autre matériau ferromagnétique adéquat. Le tube 5 avec la tige 4 est lié par un support 6 au dispositif extérieur (non représenté) dont la position doit être mesurée. Le détecteur fonctionne par courants de Foucault, c'est-à-dire que la bobine est alimentée par un courant alternatif qui crée par induction des courants de Foucault dans une couche de faible épaisseur à la surface extérieure du tube conducteur 5. Le déplacement du noyau 2 dans la bobine 1 provoque une variation de l'impédance de la bobine, en raison des pertes par courant de Foucault dans ce noyau.

La compensation en température est obtenue par la constitution particulière du noyau, de la manière suivante. Une augmentation de la température provoque une augmention correspondante de la résistivité du tube conducteur 5. Cette augmentation de résistivité entraîne une diminution dans le tube des courants de Foucault qui se traduit par une baisse de sensibilité. D'autre part, une augmentation de la température provoque une augmentation correspondante de la perméabilité magnétique de la tige ferromagnétique 4, cette augmentation de perméabilité se traduisant par une augmentation de l'inductivité de la bobine 1 et en conséquence par une augmentation de la sensibilité. Ce qui précède montre que les effets de la température sur les composants du noyau sont de sens opposés. Il est donc possible d'obtenir une compensation en température du détecteur par un choix adéquat des matériaux du noyau et des dimensions des composants. La pratique a montré que la dérive en température peut être diminuée dans une plage de température comprise entre - 40°C et + 250°C.

Ce qui précède montre que l'invention permet de réaliser un détecteur de position ne comportant qu'une seule bobine de mesure dont la longueur axiale est pratiquement égale au chemin de mesure, de sorte que ce détecteur est de construction simple, de faible poids et encombrement. En outre, en raison de la constitution particulière du noyau, le détecteur peut fonctionner entre - 40°C et + 250°C sans dérive substantielle due à la température, ce qui permet de l'utiliser dans un environnement soumis aussi bien aux basses qu'aux hautes températures. La combinaison des matériaux du noyau permet de réduire les effets de la température dans la plage indiquée.

En ce qui concerne le traitement du signal aux bornes de la bobine 1, signal représentatif de l'impédance de la bobine et en conséquence de la position du noyau dans cette dernière, on élimine l'effet de la température sur la résistivité du fil de cuivre de la bobine, en mesurant l'inductance, c'est-à-dire la composante inductive de l'impédance de la bobine, ce paramètre variant très peu en fonction de la température.

La fig.2 montre un schéma-bloc d'un circuit électronique prévu pour traiter la tension aux bornes de la bobine 1 en éliminant la composante résistive de cette tension et en crééant un signal de sortie ne dépendant que de la composante inductive de la tension.

On voit que la bobine 1 est alimentée par un courant alternatif constant I délivré par un convertisseur tension/courant 7 recevant le signal de sortie d'un oscillateur 8, à travers un adapteur de niveau 9. L'oscillateur délivre par exemple un signal d'une fréquence de 10 kHz qui est aussi la fréquence du courant I. L'adapteur 9 délivre un signal de référence au convertisseur 7 et à un déphaseur 10.

La tension V_{L} aux bornes de la bobine 1 est envoyée à travers un suiveur 12 à un amplificateur 11 . La sortie de l'amplificateur 11 est reliée à l'entrée d'un démodulateur 13 recevant le signal du déphaseur 10. La sortie du démodulateur 13 est connectée à un filtre passe-bas 14 qui délivre un signal de sortie continu de valeur proportionnelle à la position du noyau 2 dans la bobine 1. Le déphaseur 10 produit un signal de sortie dont la phase est décalée de 90° sur celle du signal de référence, ce signal déphasé commandant le démodulateur 13 de manière que celui-ci délivre exclusivement un signal correspondant à la composante inductive de la tension V_{L} aux bornes de la bobine 1, cette composante inductive étant déphasée de 90° par rapport à la composante résistive de cette même tension, elle-même en phase avec le courant I. Cet arrangement permet d'éliminer l'influence de la composante résistive variable en température dans le signal de sortie de l'électronique, resp. du filtre passe-bas 14.

## Revendications

1. Détecteur de position comprenant une bobine (1) alimentée par une source de courant alternatif (8), dans laquelle se déplace axialement un noyau (2) dont la position doit être mesurée, ce noyau (2) comprenant une tige (4) d'un premier matériau entourée d'un tube (5) d'un second matériau, l'un de ces matériaux étant de bonne conductibilité électrique et l'autre matériau est ferromagnétique, caractérisé en ce que la combinaison du comportement en température de paramètres déterminés desdits matériaux et le dimensionnement du noyau (2) sont susceptibles d'annuler dans une plage donnée la dérive de sensibilité en température du détecteur.

2. Détecteur selon la revendication 1, caractérisé en ce que le premier matériau est ferromagnétique, et que le second matériau a une bonne conductibilité électrique mais une faible perméabilité magnétique.

3. Détecteur selon la revendication 1 ou 2, caractérisé en ce que le second matériau est l'aluminium, le cuivre ou tout autre matériau conducteur adéquat et que le premier matériau est le fer, l'acier ou tout autre matériau ferromagnétique adéquat.

4. Détecteur selon l'une des revendications 1 à 3, caractérisé en ce que la diminution de la sensibilité du détecteur due à l'augmentation de la résistivité du tube (5) avec l'augmentation de la température est compensée par l'augmentation de la sensibilité due à l'augmentation de la perméabilité de la tige (4) avec l'augmentation de la température.

5. Détecteur selon la revendication 1, caractérisé en ce que la bobine est alimentée par un courant alternatif constant (I) délivré par ladite source de courant (8).

6. Détecteur selon l'une des revendications 1 à 5, caractérisé en ce que la bobine (1) est connectée à un circuit électronique de conditionnement (7 à 14) comprenant un démodulateur (13) agencé de manière à délivrer un signal de sortie dépendant exclusivement de la composante inductive de la tension (V_{L}) aux bornes de la bobine (1).

7. Détecteur selon la revendication 6, caractérisé en ce que le démodulateur reçoit un signal proportionnel à la tension aux bornes de la bobine (1) et un signal de commande délivré par un déphaseur (10) connecté à la source de courant alternatif (8), ce signal de commande étant déphasé de 90° par rapport au courant (I) alimentant la bobine (1).

8. Détecteur selon l'une des revendications 1 à 7, caractérisé en ce qu'il est compensé en température dans une plage comprise entre - 40°C et + 250 °C.

## Claims

1. Position detector comprising a coil (1) which is supplied by an alternating current source (8), and wherein a core (2) is axially displaceable whose position is to be measured, said core (2) comprising a rod (4) of a first material which is surrounded by a tube (5) of a second material, one of said materials having a good electric conductivity and the other material being ferromagnetic, characterised in that the combination of the temperature-dependent behaviour of determined parameters of said materials and the dimensioning of the core (2) are capable of cancelling the temperature-dependent sensitivity drift of the detector in a given range.

2. Detector according to claim 1, characterised in that the first material is ferromagnetic, and the second material has a good electric conductivity but a low magnetic permeability.

3. Detector according to claim 1 or 2, characterised in that the second material is aluminum, copper, or any other suitable conductive material, and the first material is iron, steel, or any other suitable ferromagnetic material.

4. Detector according to one of claims 1 to 3, characterised in that the decrease of sensitivity of the detector due to the increase of the specific resistance of the tube (5) in the case of a temperature increase is compensated by the increase of the sensitivity due to the increase of the permeability of the rod (4) in the case of a temperature increase.

5. Detector according to claim 1, characterised in that the coil is supplied with a constant alternating current (I) delivered by said current source (8).

6. Detector according to one of claims 1 to 5, characterised in that the coil (1) is connected to an electronic treatment circuit (7-14) comprising a demodulator (13) which is arranged in such a manner as to deliver an output signal depending exclusively on the inductive component of the voltage (V_{L}) across the terminals of the coil (1).

7. Detector according to claim 6, characterised in that said demodulator receives a signal which is proportional to the voltage across the terminals of the coil (1) and a control signal which is delivered by a phase shifter (10) connected to said AC source (8), said control signal being phase-shifted by 90° with respect to the current (I) supplied to the coil (1).

8. Detector according to one of claims 1 to 7, characterised in that it is temperature-compensated in a range comprised between -40°C and +250°C.

## Patentansprüche

1. Positionsgeber mit einer von einer Wechselstromquelle (8) gespeisten Spule (1), in welcher ein Kern (2), dessen Position gemessen werden soll, axial beweglich ist, wobei der Kern (2) einen Schaft (4) aus einem ersten Material aufweist, welcher von einer Hülse (5) aus einem zweiten Material umgeben ist und das eine dieser Materialien eine gute elektrische Leitfähigkeit aufweist, während das andere Material ferromagnetisch ist, dadurch gekennzeichnet, dass die Kombination des Temperaturverhaltens bestimmter Parameter der genannten Materialien und die Dimensionierung des Kerns (2) in der Lage sind, die temperaturabhängige Empfindlichkeitsabweichung des Gebers in einem bestimmten Bereich aufzuheben.

2. Geber nach Anspruch 1, dadurch gekennzeichnet, dass das erste Material ferromagnetisch ist, und dass das zweite Material eine gute elektrische Leitfähigkeit, aber eine geringe magnetische Permeabilität aufweist.

3. Geber nach Anspruch 1 oder 2, dadurch gekennzeichnet, dass das zweite Material Aluminium, Kupfer oder ein beliebiges anderes geeignetes leitendes Material und das erste Material Eisen, Stahl oder ein beliebiges anderes geeignetes ferromagnetisches Material ist.

4. Geber nach einem der Ansprüche 1 bis 3, dadurch gekennzeichnet, dass die Verminderung der Empfindlichkeit des Gebers aufgrund der Erhöhung des spezifischen Widerstandes der Hülse (5) bei erhöhter Temperatur durch die Erhöhung der Empfindlichkeit aufgrund der Erhöhung der Permeabilität des Schafts (4) bei erhöhter Temperatur kompensiert wird.

5. Geber nach Anspruch 1, dadurch gekennzeichnet, dass die Spule mit einem konstanten Wechselstrom (I) gespeist wird, welcher von der genannten Stromquelle (8) abgegeben wird.

6. Geber nach einem der Ansprüche 1 bis 5, dadurch gekennzeichnet, dass die Spule (1) an eine elektronische Auswertungsschaltung (7-14) mit einem Demodulator (13) angeschlossen ist, welcher derart ausgelegt ist, dass er ein ausschliesslich von der induktiven Komponente der Spannung (V_{L}) an den Klemmen der Spule (1) abhängiges Ausgangssignal abgibt.

7. Geber nach Anspruch 6, dadurch gekennzeichnet, dass der Demodulator ein zu der Spannung an den Klemmen der Spule (1) proportionales Signal sowie ein von einem an der Wechselstromquelle (8) angeschlossenen Phasenschieber (10) abgegebenes Steuersignal erhält, welches Steuersignal in bezug auf den Strom (I), mit welchem die Spule (1) gespeist wird, um 90° phasenverschoben ist.

8. Geber nach einem der Ansprüche 1 bis 7, dadurch gekennzeichnet, dass er in einem Bereich von -40°C bis +250°C temperaturkompensiert ist.
